# EUROPEAN PATENT APPLICATION

(11) **EP 4 525 166 A1**
(43) Date of publication of application: **19.03.2025**
(21) Application number: 22945252.9
(22) Date of filing: 08.06.2022
(51) Int. Cl.: H01M 50/342, H01M 50/30, H01M 50/543

(54) **ELECTROCHEMICAL DEVICE AND ELECTRONIC DEVICE**

(71) Applicant: Ningde Amperex Technology Limited, Ningde City Fujian 352100 (CN)
(72) Inventor: LI, Yong, Ningde, Fujian 352100 (CN)
(74) Representative: Icosa
(86) International application number: PCT/CN2022/097652
(87) International publication number: WO 2023/236107

(57) **Abstract**

An electrochemical device is provided, including a housing and an electrode assembly. The housing has an accommodating cavity and a first wall covering the accommodating cavity, and the first wall includes a first opening. The electrochemical device further includes a plate-shaped member and a cover body. The plate-shaped member is disposed between the first wall and the electrode assembly. The plate-shaped member includes a second opening. When viewed along a first direction, the cover body covers the first opening and the second opening. The cover body includes a cover portion and a protruding portion extending toward the electrode assembly. In the first direction, the protruding portion extends into the accommodating cavity and abuts against a second edge of the second opening. In a second direction, the plate-shaped member includes a first portion and a second portion connected to the first portion and extending in a direction deviating from the second direction, and the second portion surrounds the protruding portion to form the second edge. In the first direction, a distance between the first portion and the cover portion is a first distance, and a distance between the second edge and the cover portion is a second distance, the first distance being different from the second distance. An electronic device is further provided. This application can improve reliability and safety of the electrochemical device.

## Description

### TECHNICAL FIELD

This application relates to the field of energy storage technologies, and in particular, to an electrochemical device and an electronic device including such electrochemical device.

### BACKGROUND

Electrochemical devices (such as secondary batteries) are widely used in electronic products such as electronic mobile devices, electric tools, and electric vehicles, and people have increasingly high requirements for the reliability and safety of the electrochemical devices.

Because the operation inside the electrochemical device requires a relatively sealed environment from the outside, the housing of the electrochemical device needs to have a certain sealing function. In some cases, during the operation of the electrochemical device, some gases may be generated inside the housing, and the gases accumulate inside the housing. If the gases are not effectively released to the external environment, the pressure inside the housing will continue to increase, thereby affecting the reliability and safety of the electrochemical device.

### SUMMARY

This application provides an electrochemical device with high reliability and safety.

In addition, this application further provides an electronic device including the foregoing electrochemical device.

A first aspect of this application provides an electrochemical device including a housing and an electrode assembly. The housing has an accommodating cavity and a first wall covering the accommodating cavity, and the first wall includes a first opening. The electrode assembly is accommodated in the accommodating cavity. The electrochemical device further includes a plate-shaped member and a cover body. The plate-shaped member is accommodated in the accommodating cavity and disposed between the first wall and the electrode assembly. The plate-shaped member includes a second opening. A direction in which the plate-shaped member and the electrode assembly are arranged is defined as a first direction, and when viewed along the first direction, the first opening and the second opening at least partially overlap, and the cover body covers the first opening and the second opening. The cover body includes a cover portion and a protruding portion extending from the cover portion toward the electrode assembly. In the first direction, the protruding portion extends into the accommodating cavity and abuts against a second edge of the second opening. In a second direction perpendicular to the first direction, the plate-shaped member includes a first portion and a second portion connected to the first portion and extending in a direction deviating from the second direction, and the second portion surrounds the protruding portion to form the second edge. In the first direction, a distance between the first portion and the cover portion is a first distance, and a distance between the second edge and the cover portion is a second distance, the first distance being different from the second distance.

In this application, the second portion is set to extend in a direction deviating from the second direction, such that D₁ > D₂ or D₁ < D₂. As compared with a case in which the second portion extends in the second direction, the force exerted by the second portion deviating from the second direction on the protruding portion is reduced. When gas is generated and continues to accumulate inside the electrochemical device, the protruding portion is more likely to detach from the second portion, causing the cover body to be forced open. This allows the gas inside the housing to be released through the second opening and the first opening, reducing the pressure inside the accommodating cavity, thereby improving reliability and safety of the electrochemical device.

In some possible embodiments, the first distance is D₁, and the second distance is D₂, where 1.1D₁ ≤ D₂ ≤ 1.5D₁ or 0.5D₁ ≤ D₂ ≤ 0.9D₁. This can reduce the probability that the gas inside the electrochemical device is less likely to force open the cover body when D₂ is too close to D₁. In addition, the first wall and the plate-shaped member exhibiting opposite polarities can reduce the probability of short circuit caused by contact between the plate-shaped member and the first wall when D₂ is small.

In some possible embodiments, when viewed along the first direction, a portion of the second edge is provided within the first opening. This can reduce the probability of short circuit caused by the second portion being likely to be bent to come into contact with the first wall under the action of gas.

In some possible embodiments, the second portion is bent toward the cover portion relative to the first portion. This can increase a space for accommodating an electrolyte in the accommodating cavity, helping to prolong cycle life of the electrochemical device.

In some possible embodiments, in the first direction, the first opening is separated from the second opening. This can reduce the probability of short circuit caused by the second portion being likely to be bent to come into contact with the first wall under the action of gas.

In some possible embodiments, the second portion is bent toward the electrode assembly relative to the first portion. Therefore, more of a second layer can be accommodated between the protruding portion and the second portion, helping to improve sealing reliability.

In some possible embodiments, a thickness of the first portion is T₁, and a thickness of the second portion is T₂, where T₂ < T₁. Because the second portion is relatively thinner, the second portion is more likely to be separated from the protruding portion under the action of internal gas, thereby relieving the pressure inside the accommodating cavity.

In some possible embodiments, the protruding portion is made of aluminum or aluminum alloy, and the plate-shaped member is made of steel. Because the plate-shaped member has greater hardness than the protruding portion, it is easy to embed the protruding portion into the second opening of the plate-shaped member to form an embedded structure during assembly, reducing deformation of the plate-shaped member caused by the insertion of the protruding portion, thereby maintaining good sealing performance while improving the safety, and improving the reliability.

In some possible embodiments, a corrosion-resistant layer is provided on a surface of the plate-shaped member, and the corrosion-resistant layer is configured to reduce the probability of the plate-shaped member being corroded by the electrolyte such as a liquid electrolyte.

In some possible embodiments, when viewed along the second direction, an edge of the protruding portion is bent and extends in the first direction, thereby helping to improve sealing reliability of a first layer or a second layer.

In some possible embodiments, a first layer including a first insulating material is provided between the cover portion and the first wall. The first layer is configured to seal a gap between the cover portion and the first wall. When the first wall and the cover body exhibit opposite polarities, the first layer is further configured to implement electrical insulation between the first wall and the cover body to reduce the probability of short circuit.

In some possible embodiments, when viewed along the first direction, the first layer includes a first region overlapping with the cover portion and a second region separated from the cover portion. The second region can improve the sealing reliability of the first layer. In addition, when the cover body and the first wall exhibit opposite polarities, the second region can also reduce the probability of short circuit caused by contact between the cover portion and the first wall. When the cover body serves as a pole to connect an external component, the second region can also reduce the probability of short circuit caused by contact between a wire connecting the external component and the first wall.

In some possible embodiments, in the first direction, a projection of the first layer on the cover portion is located within the cover portion. In this case, the amount of the first layer is reduced, and when gas accumulates inside the electrochemical device, the cover body is more likely to be forced open after the protruding portion detaches from the second portion, further improving the reliability and safety.

In some possible embodiments, the first insulating material includes one or more selected from the group consisting of polyethylene, polypropylene, ethylene-propylene copolymer, acrylate, polyether ether ketone, polyvinylidene fluoride, and polytetrafluoroethylene.

In some possible embodiments, the first layer is connected to the protruding portion, further improving the sealing reliability of the first layer.

In some possible embodiments, the first layer is connected to the second edge, further improving the sealing reliability of the first layer.

In some possible embodiments, a second layer including a second insulating material is provided between the first wall and the plate-shaped member. The second layer is configured to seal a gap between the first wall and the plate-shaped member. In addition, when the first wall and the plate-shaped member exhibit opposite polarities, the second layer is further configured to implement electrical insulation between the first wall and the plate-shaped member to reduce the probability of short circuit.

In some possible embodiments, when viewed along the first direction, the second layer includes a third region overlapping with the plate-shaped member and a fourth region separated from the plate-shaped member. The fourth region being provided can increase a contact area between the second layer and the first wall, thereby improving the sealing reliability of the second layer. In addition, when the first wall and the plate-shaped member exhibit opposite polarities, the fourth region can also reduce the probability of short circuit caused by the first portion being bent to come into contact with the first wall under the action of gas.

In some possible embodiments, the second insulating material includes one or more selected from the group consisting of polyethylene, polypropylene, ethylene-propylene copolymer, polyether ether ketone, polyvinylidene fluoride, and polytetrafluoroethylene.

In some possible embodiments, the first layer is connected to the second layer, helping to further improve the sealing reliability.

In some possible embodiments, when viewed along the first direction, an edge of the first layer away from the protruding portion is separated from an edge of the second layer away from the protruding portion.

In some possible embodiments, the second distance is D₂, and in the first direction, a length of the protruding portion is D₃, where 0.8D₁ ≤ D₃ ≤ 1.2D₁. This can improve reliability of snap-fitting between the protruding portion and the second edge, reduce the probability of the protruding portion piercing the electrode assembly when D₃ is large, and reduce the space occupied by the protruding portion in the accommodating cavity.

In some possible embodiments, a third layer including a third insulating material is provided between the electrode assembly and the plate-shaped member. The third layer is configured to reduce the probability of short circuit caused by the protruding portion piercing the electrode assembly. When an electrode plate at the outermost layer of the electrode assembly is a negative electrode plate, the third layer can also implement electrical insulation between the electrode assembly and the plate-shaped member to reduce the risk of short circuit.

In some possible embodiments, when viewed along the first direction, the third layer includes a fifth region overlapping with the plate-shaped member and a sixth region separated from the plate-shaped member. The sixth region being provided can reduce the probability of short circuit caused by contact between the electrode plate at the outermost layer of the electrode assembly and the plate-shaped member.

In some possible embodiments, the third insulating material includes one or more selected from the group consisting of polyethylene, polypropylene, ethylene-propylene copolymer, polyether ether ketone, polyvinylidene fluoride, and polytetrafluoroethylene.

In some possible embodiments, the electrochemical device further includes a first conductive plate connected to the electrode assembly. The first conductive plate includes a first connecting portion connected to the protruding portion. In the first direction, the first connecting portion is provided between the protruding portion and the third layer. In this case, the third layer can also implement electrical insulation between the first conductive plate and the electrode plate at the outermost layer of the electrode assembly to reduce the risk of short circuit.

In some possible embodiments, the electrochemical device is a button cell. Because the button cell is generally small in size, the balance between sealing and pressure relief is achieved through fitting of such housing, helping to increase energy density.

A second aspect of this application further provides an electronic device including the foregoing electrochemical device. The electronic device is powered by the electrochemical device. The electrochemical device has good sealing performance and can release pressure under high pressure, thereby maintaining good reliability and safety.

### BRIEF DESCRIPTION OF DRAWINGS

The above and/or additional aspects and advantages of this application will become obvious and easy to understand from the description of the embodiments with reference to the following drawings.
FIG. 1 is a top view of an electrochemical device according to an embodiment of this application.
FIG. 2A is a cross-sectional view of the electrochemical device shown in FIG. 1 along II-II in some embodiments.
FIG. 2B is a partial schematic diagram of the electrochemical device shown in FIG. 2A at position A.
FIG. 3A is a schematic structural diagram of the electrochemical device shown in FIG. 2A on side IIIA.
FIG. 3B is a schematic structural diagram of the electrochemical device shown in FIG. 2A on side IIIB.
FIG. 4 is a schematic diagram of a plate-shaped member of the electrochemical device shown in FIG. 2A in some embodiments.
FIG. 5 is a schematic diagram of a plate-shaped member of the electrochemical device shown in FIG. 2A in some other embodiments.
FIG. 6 is a schematic diagram of a plate-shaped member of the electrochemical device shown in FIG. 2A in some other embodiments.
FIG. 7 is a schematic diagram of a plate-shaped member of the electrochemical device shown in FIG. 2A in some other embodiments.
FIG. 8 is a schematic diagram of a plate-shaped member of the electrochemical device shown in FIG. 2A in some other embodiments.
FIG. 9 is a partial schematic diagram of the electrochemical device shown in FIG. 2A in some other embodiments.
FIG. 10 is a partial schematic diagram of the electrochemical device shown in FIG. 2A in some other embodiments.
FIG. 11 is a partial schematic diagram of the electrochemical device shown in FIG. 2A in some other embodiments.
FIG. 12 is a partial schematic diagram of the electrochemical device shown in FIG. 2A in some other embodiments.
FIG. 13 is a partial schematic diagram of the electrochemical device shown in FIG. 2A in some other embodiments.
FIG. 14 is a partial schematic diagram of the electrochemical device shown in FIG. 1 in some other embodiments.
FIG. 15A is a cross-sectional view of an electrochemical device according to another embodiment of this application.
FIG. 15B is a partial schematic diagram of the electrochemical device shown in FIG. 15A at position B.
FIG. 16 is a top view of an electrochemical device according to another embodiment of this application.
FIG. 17A is a cross-sectional view of the electrochemical device shown in FIG. 16 along XVII-XVII.
FIG. 17B is a partial schematic diagram of the electrochemical device shown in FIG. 17A at position C.
FIG. 18 is a schematic structural diagram of an electronic device according to an embodiment of this application.

Reference signs of main components:

| | |
|---|---|
| electronic device | 1 |
| housing | 10. |
| first wall | 11 |
| second wall | 12 |
| electrode assembly | 20 |
| first electrode plate | 21 |
| first conductive material layer | 21a |
| second conductive material layer | 21b |
| first conductive layer | 21c |
| second electrode plate | 22 |
| third conductive material layer | 22a |
| fourth conductive material layer | 22b |
| second conductive layer | 22c |
| separator | 23 |
| first conductive plate | 30 |
| first conductive portion | 31 |
| second conductive portion | 32 |
| second conductive plate | 40 |
| third conductive portion | 41 |
| fourth conductive portion | 42 |
| plate-shaped member | 50 |
| first portion | 51 |
| second portion | 52 |
| corrosion-resistant layer | 53 |
| cover body | 60 |
| cover portion | 61 |
| protruding portion | 62 |
| first layer | 70 |
| first region | 71 |
| second region | 72 |
| second layer | 80 |
| third region | 81 |
| fourth region | 82 |
| third layer | 90 |
| fifth region | 91 |
| sixth region | 92 |
| first opening | 110 |
| first edge | 110a |
| first end | 210 |
| second end | 212 |
| third end | 221 |
| fourth end | 222 |
| electrochemical device | 100, 200, 300 |
| first connecting portion | 310 |
| second connecting portion | 311 |
| second opening | 500 |
| second edge | 500a |
| first surface | 501 |
| second surface | 502 |
| fourth edge | 503 |
| third edge | 611 |
| fifth edge | 621 |
| sixth edge | 701 |
| seventh edge | 801 |
| eighth edge | 901 |
| first section | 5021 |
| second section | 5022 |
| first direction | X |
| second direction | Y |
| accommodating cavity | S |
| first distance | D₁ |
| second distance | D₂ |
| length | D₃ |
| thickness | T₁, T₂ |
| width | W₁, W₂ |
| boundary line | L1-L5 |

This application will be further described with reference to the accompanying drawings in the following specific embodiments.

### DESCRIPTION OF EMBODIMENTS

The following clearly and in detail describes the technical solutions in some embodiments of this application. Apparently, the described embodiments are some rather than all of the embodiments of this application. Unless otherwise defined, all technical and scientific terms used herein shall have the same meanings as commonly understood by persons skilled in the art to which this application belongs. The terms used in the specification of this application are for description of specific embodiments only without any intention to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the description of some embodiments of this application means "one or more embodiments of this application".

The technical terms used herein are merely intended to describe specific embodiments rather than to limit this application. As used herein, the singular forms are intended to include the plural forms as well, unless otherwise clearly indicated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

As used herein, terms "parallel" and "perpendicular" are used to describe an ideal state between two components. During actual production or use, two components may be approximately parallel or perpendicular to each other. For example, with reference to numerical values, "being parallel" may indicate that an included angle between two straight lines is within a range of ±10°, "being parallel" may indicate that a dihedral angle of two planes is within a range of ±10°, and "being parallel" may also indicate that an included angle between a straight line and a plane is within a range of ±10°. "Being perpendicular" may indicate that an included angle between two straight lines is within a range of 90°±10°, "being perpendicular" may indicate that a dihedral angle of two planes is within a range of 90°±10°, and "being perpendicular" may also indicate that an included angle between a straight line and a plane is within a range of 90°±10°. Two components described as "being parallel" or "being perpendicular" to each other may not be absolutely straight lines or planes, and may be approximately straight lines or planes. From a macroscopic perspective, the component can be considered as a "straight line" or "plane" as long as its overall extension direction is a straight line or a plane.

In this application, design relationships of greater than, less than, or not equal to between parameter values need to exclude reasonable errors of a measurement device.

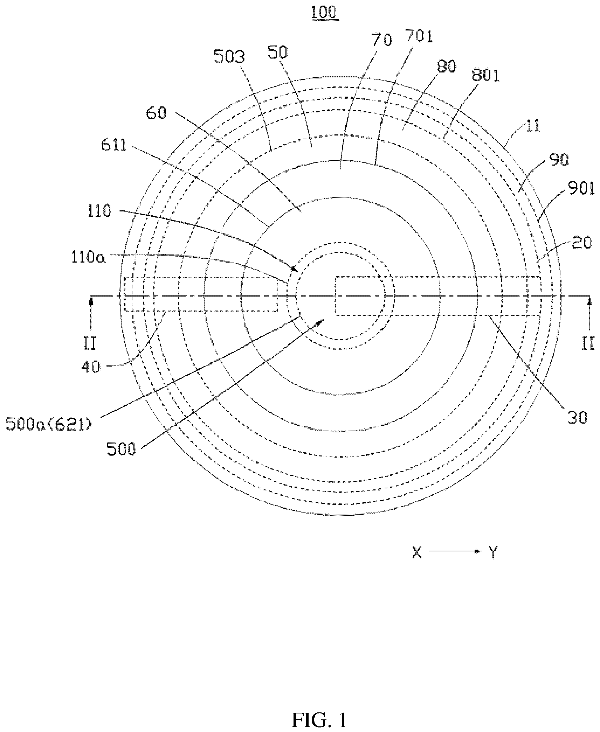

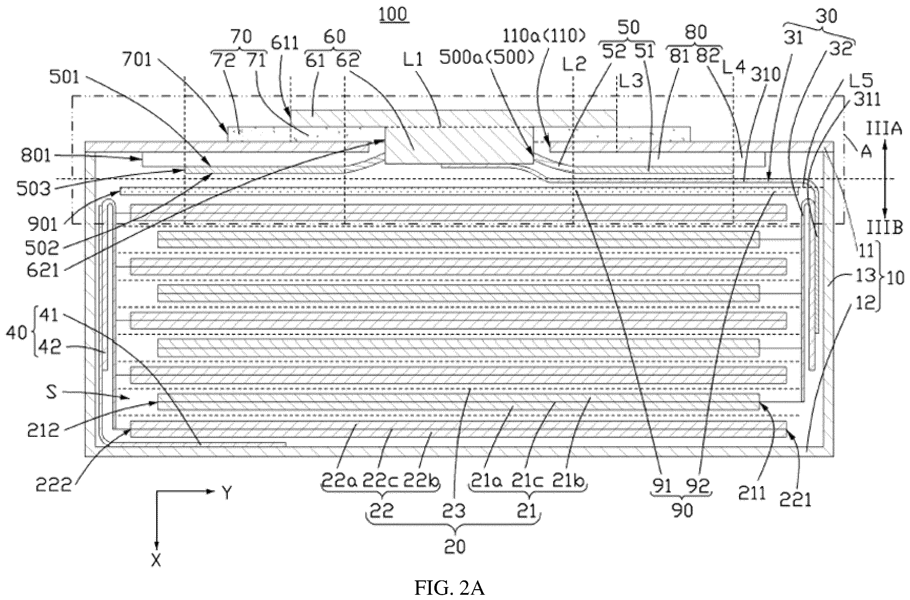

Referring to FIG. 1 and FIG. 2A, an embodiment of this application provides an electrochemical device 100 including a housing 10, an electrode assembly 20, and an electrolyte (not shown in the figures). The housing 10 includes a first wall 11, a second wall 12, and a side wall 13. The first wall 11 and the second wall 12 are disposed opposite each other in a first direction X. The first wall 11 may be roughly circular, and the second wall 12 may also be roughly circular. The first wall 11 and the second wall 12 may be parallel to each other and both perpendicular to the first direction X. The side wall 13 is connected to the first wall 11 on one end and connected to the second wall 12 on another end, such that a roughly cylindrical accommodating cavity S is formed in the housing 10. When viewed along the first direction X, the first wall 11 covers the accommodating cavity S. The electrode assembly 20 and the electrolyte such as a liquid electrolyte are accommodated in the accommodating cavity S. The first wall 11 includes a first opening 110, and the first opening 110 communicates with the accommodating cavity S. In some embodiments, the electrochemical device 100 may be a button cell, and the entire housing 10 may be made of a steel material. In some embodiments, the steel housing includes elements Fe and C, and the steel housing may further include one or more of elements Ni, Co, Al, Mn, Cr, Cu, Mg, Mo, S, Si, Ti, V, Pb, Sb, N, and P. In addition, the side wall 13 and the second wall 12 may be integrally formed, and the first wall 11 and the side wall 13 may be fixed through welding. In some other embodiments, the first wall 11 may alternatively be made of an insulating material resistant to electrolyte corrosion, such as polystyrene (PS), polypropylene (PP), polyethylene (PE), polyester (PET), polyvinyl chloride (PVC), polyimide (PI), acrylonitrile-butadiene-styrene plastic (ABS), polycarbonate (PC), or polyamide (PA), and the side wall 13 and the second wall 12 may be made of a steel material. In this case, the side wall 13 and the second wall 12 may be integrally formed, and the first wall 11 and the side wall 13 may be fixed through snap-fitting.

As shown in FIG. 2A, the electrode assembly 20 includes a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, thereby reducing the probability of short circuit caused by the contact between the first electrode plate 21 and the second electrode plate 22. In FIG. 2A, for simplicity, the separator 23 is shown in dashed lines (composed of multiple spaced short lines). In some embodiments, the electrode assembly 20 is a laminated structure, that is, the first electrode plate 21, the separator 23, and the second electrode plate 22 are stacked in the first direction X to form the electrode assembly 20. One second electrode plate 22 is sandwiched between two adjacent first electrode plates 21, and the second electrode plate 22 and the first electrode plate 21 are alternately stacked. In a second direction Y, the first electrode plate 21 includes a first end 211 and a second end 212 disposed opposite each other, and the second electrode plate 22 includes a third end 221 and a fourth end 222 disposed opposite each other. The first end 211 and the third end 221 are located on a same side of the electrode assembly, and the second end 212 and the fourth end 222 are located on another side of the electrode assembly. In some embodiments, the first electrode plate 21 is a positive electrode, and the second electrode plate 22 is a negative electrode. In this case, to reduce the probability of lithium precipitation at the negative electrode, in the second direction Y, the third end 221 of the second electrode plate 22 extends beyond the first end 211 of the first electrode plate 21, and the fourth end 222 of the second electrode plate 22 extends beyond the second end 212 of the first electrode plate 21.

In some embodiments, the first electrode plate 21 includes a first conductive material layer 21a, a first conductive layer 21c, and a second conductive material layer 21b stacked in sequence. The first conductive layer 21c may have the function of collecting current, for example, the first conductive layer 21c may include aluminum or nickel. In some embodiments, when the first electrode plate 21 is a positive electrode, the first conductive layer 21c includes aluminum foil, where the aluminum foil has weak strength but good conductivity. The first conductive material layer 21a and the second conductive material layer 21b both include an active substance, for example, at least one of lithium cobalt oxide, lithium manganese oxide, lithium nickel oxide, lithium nickel cobalt manganate, lithium iron phosphate, lithium manganese iron phosphate, lithium vanadium phosphate, lithium vanadyl phosphate, a lithium-rich manganese-based material, or lithium nickel cobalt aluminate.

The second electrode plate 22 includes a third conductive material layer 22a, a second conductive layer 22c, and a fourth conductive material layer 22b stacked in sequence. The second conductive layer 22c may have the function of collecting current, for example, the second conductive layer 22c may include copper, nickel, or a carbon-based conductive substance. In some embodiments, when the second electrode plate 22 is a negative electrode, the second conductive layer 22c includes copper. The third conductive material layer 22a and the fourth conductive material layer 22b both include an active substance, where the active substance may be selected from at least one of a graphite material, an alloy material, or lithium metal and an alloy thereof. The graphite material may be selected from at least one of artificial graphite or natural graphite; and the alloy material may be selected from at least one of silicon, silicon oxide, tin, or titanium sulfide.

The separator 23 includes at least one of polyethylene, polypropylene, polyvinylidene fluoride, polyethylene terephthalate, polyimide, or aramid.

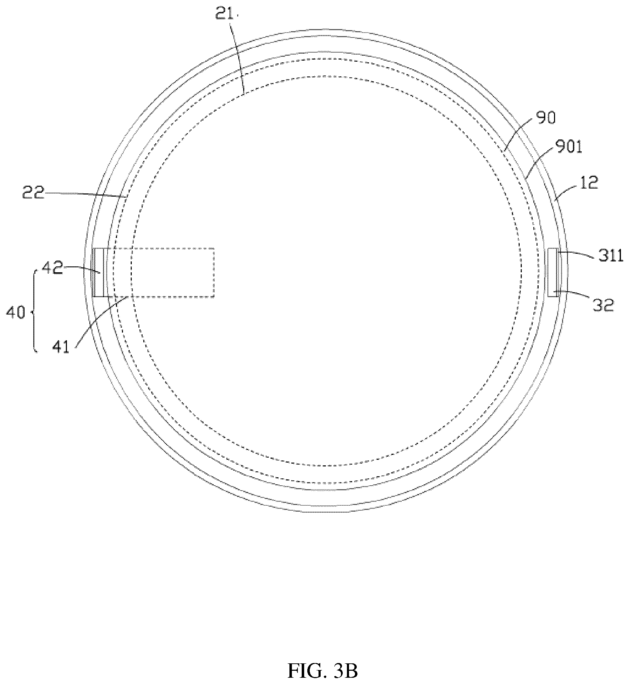

As shown in FIG. 2A and FIG. 3B, the electrochemical device 100 further includes a first conductive plate 30 and a second conductive plate 40. As shown in FIG. 2A, the first conductive plate 30 is electrically connected to the first electrode plate 21, and the second conductive plate 40 is electrically connected to the second electrode plate 22. Specifically, the first conductive plate 30 is electrically connected to the first conductive layer 21c and extends from the first end 211, and the second conductive plate 40 is electrically connected to the second conductive layer 22c and extends from the fourth end 222. In some embodiments, the first conductive plate 30 includes one first conductive portion 31 and a plurality of second conductive portions 32. The plurality of second conductive portions 32 are connected to the first conductive layers 21c of a plurality of first electrode plates 21 respectively, and each second conductive portion 32 and the first conductive layer 21c may be integrally formed or fixed through welding. The first conductive portion 31 and the plurality of second conductive portions 32 are fixed through welding. The second conductive plate 40 includes one third conductive portion 41 and a plurality of fourth conductive portions 42. The plurality of fourth conductive portions 42 are connected to the second conductive layers 22c of a plurality of second electrode plates 22 respectively, and each fourth conductive portion 42 and the second conductive layer 22c may be integrally formed or fixed through welding. The third conductive portion and the plurality of fourth conductive portions 42 are fixed through welding.

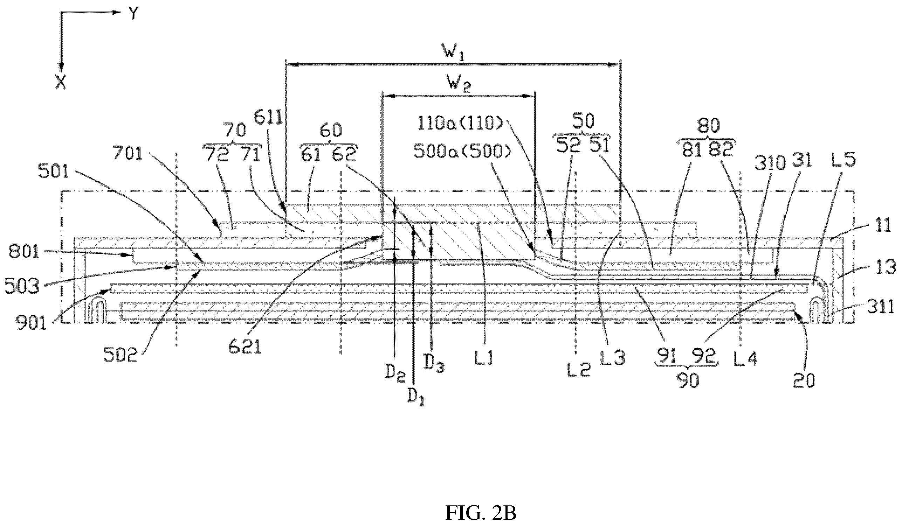

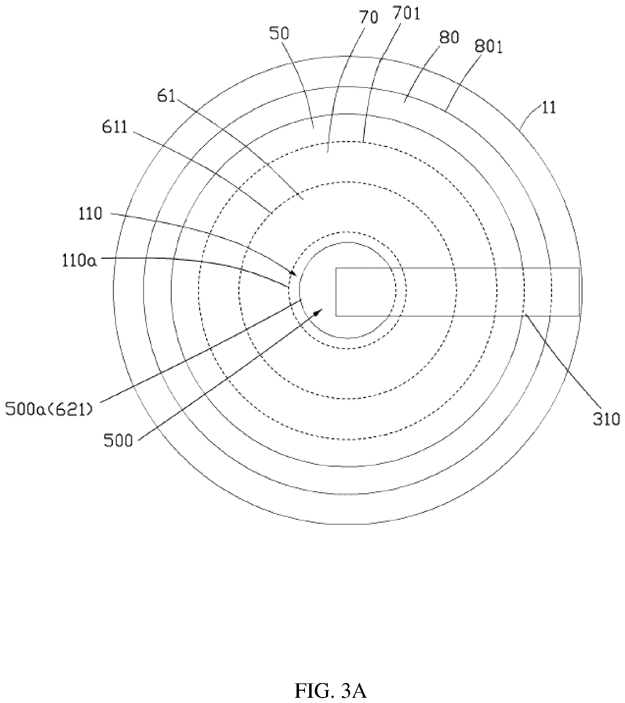

Referring to FIG. 2A, FIG. 2B, and FIG. 3A together, the electrochemical device 100 further includes a plate-shaped member 50 and a cover body 60. The plate-shaped member 50 may be made of a conductive material or an insulating material resistant to electrolyte corrosion. FIG. 2B is a partial schematic diagram of the electrochemical device 100 shown in FIG. 2A at position A, and the position A is framed with double-dotted dashed lines. The entire cover body 60 is made of a conductive material. The plate-shaped member 50 is accommodated in the accommodating cavity S and disposed between the first wall 11 and the electrode assembly 20. A direction in which the first wall 11, the plate-shaped member 50, and the electrode assembly 20 are arranged is the first direction X. The plate-shaped member 50 includes a second opening 500. When viewed along the second direction Y, the plate-shaped member 50 includes a first surface 501 facing the first wall 11 and a second surface 502 disposed opposite the first surface 501. The second opening 500 penetrates the first surface 501 and the second surface 502. When viewed along the first direction X, the first opening 110 and the second opening 500 at least partially overlap, and a portion of the second opening 500 may be located within the range of a first edge 110a of the first opening 110. The cover body 60 covers the first opening 110 and the second opening 500. In some embodiments, the first opening 110 and the second opening 500 each may be circular. When viewed along the first direction X, the plate-shaped member 50 may also be circular. In other embodiments, the shapes of the plate-shaped member 50, the first opening 110, and the second opening 500 may alternatively be changed, such as being elliptical, square, or hexagonal.

The cover body 60 includes a cover portion 61 and a protruding portion 62. The cover portion 61 is located outside the housing 10, and in the first direction X, at least a portion of the first wall 11 is located between the cover portion 61 and the electrode assembly 20. The protruding portion 62 is formed by extending from the cover portion 61 toward the electrode assembly 20. The virtual boundary line between the cover portion 61 and the protruding portion 62 is shown in a dashed line L1. The first conductive plate 30 is connected to the protruding portion 62, for example, the first conductive portion 31 of the first conductive plate 30 may be connected to the protruding portion 62 through welding. The second conductive plate 40 is connected to the housing 10 (for example, when the entire housing 10 is made of a steel material, the third conductive portion 41 of the second conductive plate 40 may be connected to the first wall 11, the second wall 12, or the side wall 13 through welding). In some embodiments, the second conductive plate 40 is connected to the second wall 12. In this case, the cover body 60 serves as a pole, and the cover body 60 and the housing 10 exhibit opposite polarities, allowing the electrochemical device 100 to supply power to an external component (not shown in the figures). When the first electrode plate 21 is a positive electrode plate and the second electrode plate 22 is a negative electrode plate, the cover body 60 exhibits positive polarity, and the housing 10 exhibits negative polarity. As shown in FIG. 2B, in some embodiments, when viewed along the first direction X, in the second direction Y perpendicular to the first direction X, width W₁ of the cover portion 61 is greater than width W₂ of the protruding portion 62, allowing the cover portion 61 to be clamped on a side of the first wall 11 away from the electrode assembly 20. When viewed along the first direction, a third edge 611 of the cover portion 61 is separated from a fourth edge 503 of the plate-shaped member 50 away from the second opening 500. In some embodiments, the cover portion 61 and the protruding portion 62 may be integrally formed. When viewed along the first direction X, the cover portion 61 and the protruding portion 62 may both be circular. In some other embodiments, the cover portion 61 and the protruding portion 62 may alternatively be a separate structure. The shapes of the cover portion 61 and the protruding portion 62 may alternatively be changed, such as being elliptical, square, or hexagonal.

In the first direction X, the protruding portion 62 extends into the accommodating cavity S. The protruding portion 62 may be separated from the first edge 110a of the first opening 110, and the protruding portion 62 abuts against a second edge 500a of the second opening 500. Specifically, in some embodiments, when viewed along the second direction Y, the protruding portion 62 has a fifth edge 621 extending in the first direction X, and the fifth edge 621 is connected to the cover portion 61. The fifth edge 621 of the protruding portion 62 may be separated from the first edge 110a of the first opening 110, and the fifth edge 621 of the protruding portion 62 abuts against the second edge 500a of the second opening 500. Therefore, when the plate-shaped member 50 is made of a conductive material, the plate-shaped member 50 and the cover body 60 can exhibit a same polarity. In some embodiments, the plate-shaped member 50 and the cover body 60 are both made of a metal material. Specifically, the material of the plate-shaped member 50 may be selected from metals such as aluminum, copper, steel, or nickel or alloys thereof; and the material of the cover body 60 may be selected from metals such as aluminum, copper, steel, or nickel or alloys thereof.

As shown in FIG. 2A and FIG. 2B, in the second direction Y, the plate-shaped member 50 includes a first portion 51 and a second portion 52 connected to the first portion 51. The second portion 52 surrounds the protruding portion 62 to form the second edge 500a. The fourth edge 503 of the plate-shaped member 50 is an edge of the first portion 51 away from the second portion 52. The entire first portion 51 may extend in the second direction Y. The second portion 52 extends in a direction deviating from the second direction Y, but the entire second portion 52 does not extend in the first direction X. In other words, the second portion 52 is oblique to the second direction Y. The virtual boundary line between the first portion 51 and the second portion 52 is shown in a dashed line L2. In the first direction X, a distance between the first portion 51 and the cover portion 61 is a first distance D₁, and a distance between the second edge 500a and the cover portion 61 is a second distance D₂. The first distance D₁ is different from the second distance D₂. In some embodiments, D₁ and D₂ satisfy D₁ > D₂.

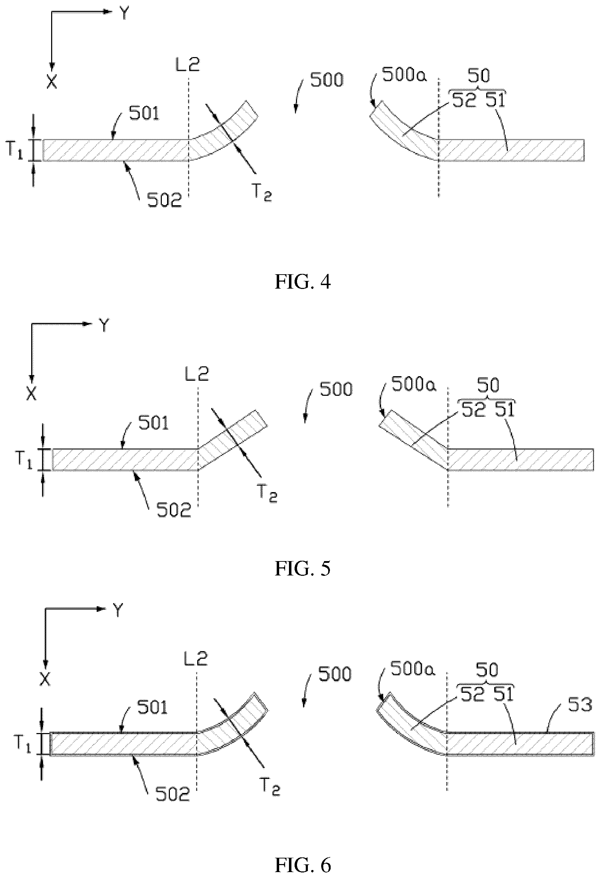

In some embodiments, the second portion 52 is bent toward the cover portion 61 relative to the first portion 51, such that D₁ > D₂. Referring to FIG. 2A, FIG. 2B, and FIG. 4 together, when viewed along the second direction Y, the second portion 52 located on either side of the protruding portion 62 may be arc-shaped. Referring to FIG. 5, in some other embodiments, when viewed along the second direction Y, the second portion 52 located on either side of the protruding portion 62 may alternatively be flat. It can be understood that FIG. 4 and FIG. 5 separately show cross-sectional views of the plate-shaped member 50, illustrating the structure of the plate-shaped member 50 when viewed along the second direction Y. With the second opening 500 being disposed, the plate-shaped member 50 in FIG. 4 and FIG. 5 includes portions located on two sides of the second opening 500, and these two portions may be symmetrically arranged relative to the second opening 500. However, when viewed along the first direction X, the plate-shaped member 50 surrounds the second opening 500 and may be in a continuous annular shape, so the boundary line L2 may be set to be circular when viewed along the first direction X. For simplicity, the boundary line L2 is marked only on the plate-shaped member 50 on one side of the protruding portion 62.

As shown in FIG. 2B, in this application, the second portion 52 is set to extend in a direction deviating from the second direction Y, such that D₁ > D₂. As compared with a case in which the second portion 52 extends in the second direction Y, the force exerted by the second portion 52 deviating from the second direction Y on the protruding portion 62 is reduced. When gas is generated and continues to accumulate inside the electrochemical device 100, the protruding portion 62 is more likely to detach from the second portion 52, causing the cover body 60 to be forced open. This allows the gas inside the housing 10 to be released through the second opening 500 and the first opening 110, reducing the pressure inside the accommodating cavity S, thereby improving reliability and safety of the electrochemical device 100. The second portion 52 being bent toward the cover portion 61 can also increase a space for accommodating the electrolyte in the accommodating cavity S, helping to prolong cycle life of the electrochemical device 100. When the electrochemical device 100 is a button cell, because the button cell is generally small in size, the balance between sealing and pressure relief is achieved through fitting of the plate-shaped member 50, the cover body 60, and such housing 10, helping to increase energy density.

In some embodiments, D₁ and D₂ further satisfy 0.5D₁ ≤ D₂ ≤ 0.9D₁. This can reduce the probability that the gas inside the electrochemical device 100 is less likely to force open the cover body 60 when D₂ is too close to D₁. In addition, the first wall 11 and the plate-shaped member 50 exhibiting opposite polarities can reduce the probability of short circuit caused by contact between the plate-shaped member 50 and the first wall 11 when D₂ is small (that is, the second portion 52 is bent to a great extent relative to the first portion 51).

During assembly, the electrode assembly 20 with the first conductive plate 30 and the second conductive plate 40 is placed in the accommodating cavity S, such that the second conductive plate 40 is electrically connected to the second wall 12 or the side wall 13. The protruding portion 62 of the cover body 60 is inserted into the first opening 110 of the first wall 11 and the second opening 500 of the plate-shaped member 50 sequentially, such that the protruding portion 62 abuts against the second edge 500a of the second opening 500 to form an embedded structure. Then, the protruding portion 62 is electrically connected to the first conductive plate 30, and the first wall 11 is mounted on the side wall 13 to form the housing 10, such that the first opening 110 and the second opening 500 at least partially overlap when viewed along the first direction X. In some embodiments, the protruding portion 62 is made of aluminum or aluminum alloy, and the plate-shaped member 50 is made of steel. Because the plate-shaped member 50 has greater hardness than the protruding portion 62, it is easy to embed the protruding portion 62 into the second opening 500 of the plate-shaped member 50 to form an embedded structure during the assembly, reducing deformation of the plate-shaped member 50 caused by the insertion of the protruding portion 62, thereby improving the reliability and safety of the electrochemical device 100. In addition, this can also maintain good sealing performance, improving sealing reliability. Further, as shown in FIG. 6, a corrosion-resistant layer 53 may be provided on a surface of the plate-shaped member 50. The corrosion-resistant layer 53 is configured to reduce the probability of the plate-shaped member 50 being corroded by the electrolyte. The corrosion-resistant layer 53 may be a metal layer, such as a zinc layer, a tin layer, a copper layer, or a chromium layer. The corrosion-resistant layer 53 may be formed on the surface of the plate-shaped member 50 through electroplating, electroless plating, or vapor deposition. In some other embodiments, the corrosion-resistant layer 53 may alternatively be an inorganic coating, such as a ceramic layer or a polymer layer.

As shown in FIG. 2A and FIG. 2B, in some embodiments, when viewed along the first direction X, a portion of the second edge 500a is located within the first opening 110. In some embodiments, the plate-shaped member 50 and the first wall 11 may exhibit opposite polarities. With a portion of the second edge 500a being located within the first opening 110, compared with a case in which the second edge 500a is located outside the first opening 110, this application can reduce the probability of short circuit caused by the second portion 52 being likely to be bent to come into contact with the first wall 11 under the action of gas when the gas accumulates inside the electrochemical device 100.

As shown in FIG. 2A and FIG. 2B, in some embodiments, in the first direction X, the first opening 110 is separated from the second opening 500. Specifically, in the first direction X, the first opening 110 is located between the cover portion 61 and the second opening 500. This can also reduce the probability of short circuit caused by the second portion 52 being likely to be bent to come into contact with the first wall 11 under the action of gas when the gas accumulates inside the electrochemical device 100.

In some embodiments, in the first direction X, length of the protruding portion 62 is D₃, where 0.8D₂ ≤ D₃ ≤ 1.2D₂. This can improve reliability of snap-fitting between the protruding portion 62 and the second edge 500a, reduce the probability of the protruding portion 62 piercing the electrode assembly 20 when D₃ is large (for example, during compression testing (crush testing)), and also reduce the space occupied by the protruding portion 62 in the accommodating cavity S.

As shown in FIG. 2A and FIG. 2B, in some embodiments, a first layer 70 including a first insulating material is provided between the cover portion 61 and the first wall 11. The first layer 70 is configured to seal a gap between the cover portion 61 and the first wall 11, reducing the probability of the electrolyte flowing out of the accommodating cavity S through the gap between the cover portion 61 and the first wall 11 during normal use of the electrochemical device 100. In addition, when the first wall 11 and the cover body 60 exhibit opposite polarities, the first layer 70 is further configured to implement electrical insulation between the first wall 11 and the cover body 60 to reduce the probability of short circuit. It can be understood that when gas accumulates inside the electrochemical device 100 such that the protruding portion 62 detaches from the second portion 52, the first layer 70 is also separated from the cover body 60 under the action of the gas, causing the cover body 60 to be forced open, thereby relieving the pressure inside the accommodating cavity S. In some embodiments, the first insulating material may include at least one of polyethylene, polypropylene, ethylene-propylene copolymer, acrylate, polyether ether ketone, polyvinylidene fluoride, or polytetrafluoroethylene. The first layer 70 may be fixed between the cover portion 61 and the first wall 11 through interference fit. In other embodiments, the first layer 70 may alternatively be fixed between the cover portion 61 and the first wall 11 through riveting or the like. As shown in FIG. 1, when viewed along the first direction X, the first layer 70 may be circular.

As shown in FIG. 2A and FIG. 2B, in some embodiments, in the first direction X, a portion of a projection of the first layer 70 on the cover portion 61 is located within the cover portion 61, and another portion is located outside the cover portion 61. Therefore, when viewed along the first direction X, the first layer 70 includes a first region 71 overlapping with the cover portion 61 and a second region 72 separated from the cover portion 61. The virtual boundary line between the first region 71 and the second region 72 is shown in a dashed line L3 (the boundary line L3 may be set to be circular when viewed along the first direction X, and for simplicity, the boundary line L3 is marked only on the first layer 70 on one side of the protruding portion 62). The second region 72 being provided can increase a contact area between the first layer 70 and the first wall 11, thereby improving sealing reliability of the first layer 70. In addition, when the cover body 60 and the first wall 11 exhibit opposite polarities, the second region 72 can also reduce the probability of short circuit caused by contact between the cover portion 61 and the first wall 11. When the cover body 60 serves as a pole to connect an external component, the second region 72 can also reduce the probability of short circuit caused by contact between a wire connecting the external component and the first wall 11.

In some embodiments, the first layer 70 may be further connected to the protruding portion 62. This can further improve the sealing reliability of the first layer 70. Further, the first layer 70 may also be connected to the first edge 110a. This can further improve the sealing reliability of the first layer 70.

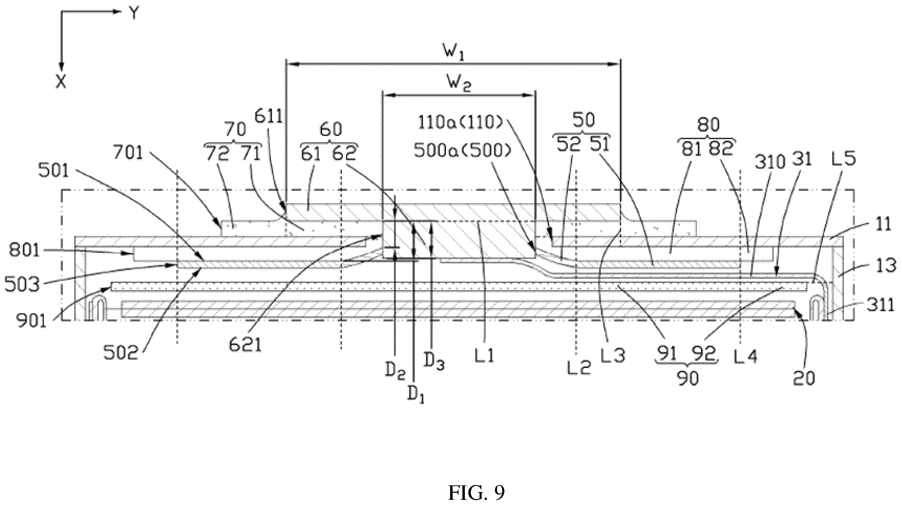

As shown in FIG. 9, in some other embodiments, the first layer 70 may also be further connected to the third edge 611 of the cover portion 61. Thus, the first layer 70 can fully seal the gap between the cover body 61 and the first wall 11 in the first direction X, further improving the sealing reliability of the first layer 70.

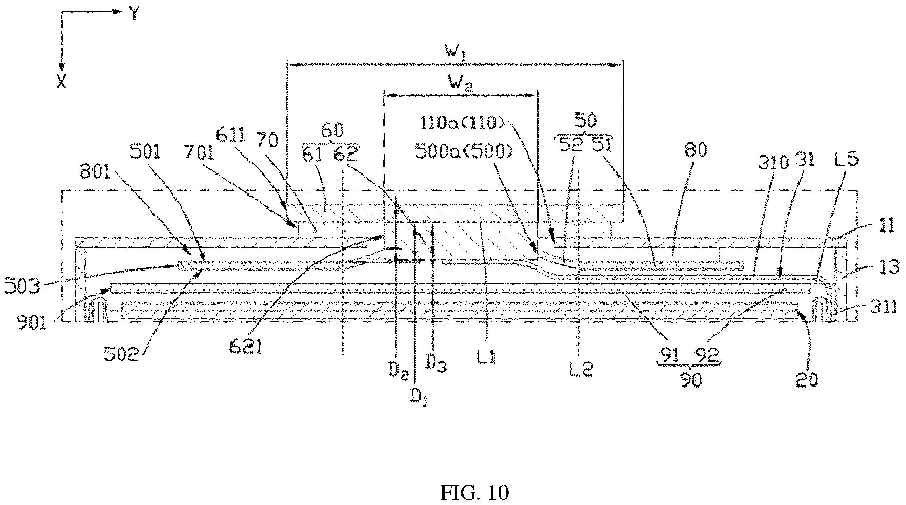

As shown in FIG. 10, in some other embodiments, in the first direction X, the projection of the first layer 70 on the cover portion 61 may alternatively be located within the cover portion 61. In this case, the amount of the first layer 70 is reduced, and a contact area between the first layer 70 and the cover portion 61 is reduced, so when gas accumulates inside the electrochemical device 100, the cover body 60 is more likely to be forced open after the protruding portion 62 detaches from the second portion 52, further improving the reliability and safety.

As shown in FIG. 2A and FIG. 2B, in some embodiments, a second layer 80 including a second insulating material is provided between the first wall 11 and the plate-shaped member 50. The second layer 80 is configured to seal a gap between the first wall 11 and the plate-shaped member 50, reducing the probability of the electrolyte flowing out of the accommodating cavity S through the gap between the first wall 11 and the plate-shaped member 50 during normal use of the electrochemical device 100. In addition, when the first wall 11 and the plate-shaped member 50 exhibit opposite polarities, the second layer 80 is further configured to implement electrical insulation between the first wall 11 and the plate-shaped member 50 to reduce the probability of short circuit. D₁ and D₂ satisfying 0.5D₁ ≤ D₂ ≤ 0.9D₁ also reduces the probability of poor sealing and electrolyte leakage caused by the reduced contact area between the first layer 70 or the second layer 80 and the protruding portion 62 when D₂ is small (that is, thickness of the first layer 70 or the second layer 80 is small). It can be understood that in this case, the distance D₁ between the first portion 51 and the cover portion 61 is a sum of the thicknesses of the first layer 70, the second layer 80, and the first wall 11. One surface of the first wall 11 (the upper surface shown in FIG. 2A and FIG. 2B) extends in the second direction Y to form the virtual boundary line between the first layer 70 and the second layer 80. In some embodiments, the second insulating material includes at least one of polyethylene, polypropylene, ethylene-propylene copolymer, polyether ether ketone, polyvinylidene fluoride, or polytetrafluoroethylene. The second layer 80 may be fixed between the first wall 11 and the plate-shaped member 50 through interference fit. In other embodiments, the second layer 80 may alternatively be fixed between the first wall 11 and the plate-shaped member 50 through riveting or the like. As shown in FIG. 1, when viewed along the first direction X, the second layer 80 may be circular.

In some embodiments, when viewed along the first direction X, the second layer 80 includes a third region 81 overlapping with the plate-shaped member 50 and a fourth region 82 separated from the plate-shaped member 50. The virtual boundary line between the third region 81 and the fourth region 82 is shown in a dashed line L4 (the boundary line L4 may be set to be circular when viewed along the first direction X, and for simplicity, the boundary line L4 is marked only on the second layer 80 on one side of the protruding portion 62). The fourth region 82 being provided can increase a contact area between the second layer 80 and the first wall 11, thereby improving sealing reliability of the second layer 80. In addition, if the first wall 11 and the plate-shaped member 50 exhibit opposite polarities, the fourth region 82 can also reduce the probability of short circuit caused by the first portion 51 being bent to come into contact with the first wall 11 under the action of gas when the gas accumulates inside the electrochemical device 100. In some embodiments, when viewed along the first direction X, a sixth edge 701 of the first layer 70 away from the protruding portion 62 is separated from a seventh edge 801 of the second layer 80 away from the protruding portion 62.

In some embodiments, when the first opening 110 is separated from the second opening 500 in the first direction X, the second layer 80 may also be connected to the protruding portion 62. This can further improve the sealing reliability of the second layer 80. Further, the second layer 80 may also be connected to the first edge 110a. This can further improve the sealing reliability of the second layer 80.

As shown in FIG. 2A and FIG. 2B, in some embodiments, the first layer 70 is connected to the second layer 80, helping to further improve the sealing reliability. Because the protruding portion 62 is separated from the first edge 110a of the first opening 110, the first layer 70 and the second layer 80 may be connected within the first opening 110. In addition, because the second portion 52 is bent toward the cover portion 61 relative to the first portion 51 in this case, the second portion 52 can compress the connecting portion of the first layer 70 and the second layer 80, helping to further improve the sealing reliability. In some embodiments, the first layer 70 and the second layer 80 are an integral structure, and the first insulating material and the second insulating material are made of a same material. In other embodiments, the first insulating material may alternatively be different from the second insulating material, which is not limited in this application.

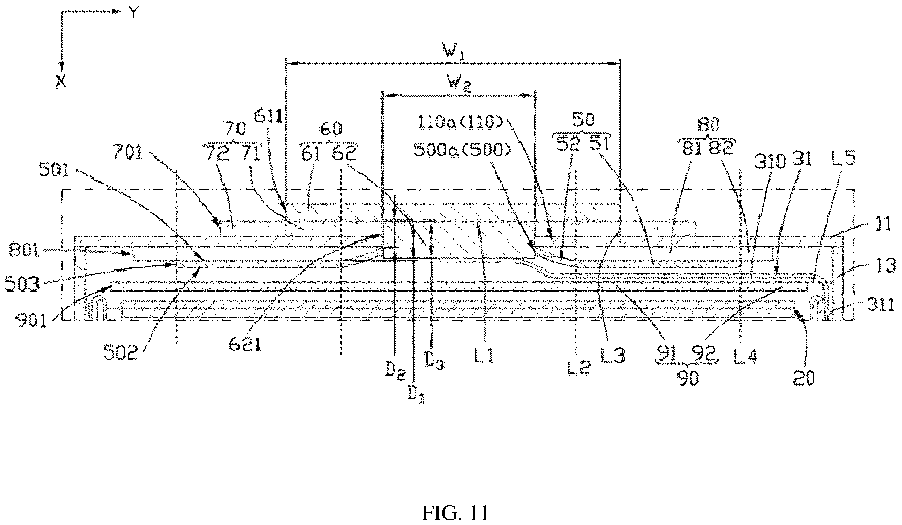

As shown in FIG. 11, in some other embodiments, the first layer 70 and the second layer 80 may alternatively not be connected. In this case, after the protruding portion 62 is embedded into the second opening 500 of the plate-shaped member 50 to form an embedded structure during the assembly, it is easy to snap-fit the first layer 70 between the cover portion 61 and the first wall 11, improving assembly efficiency.

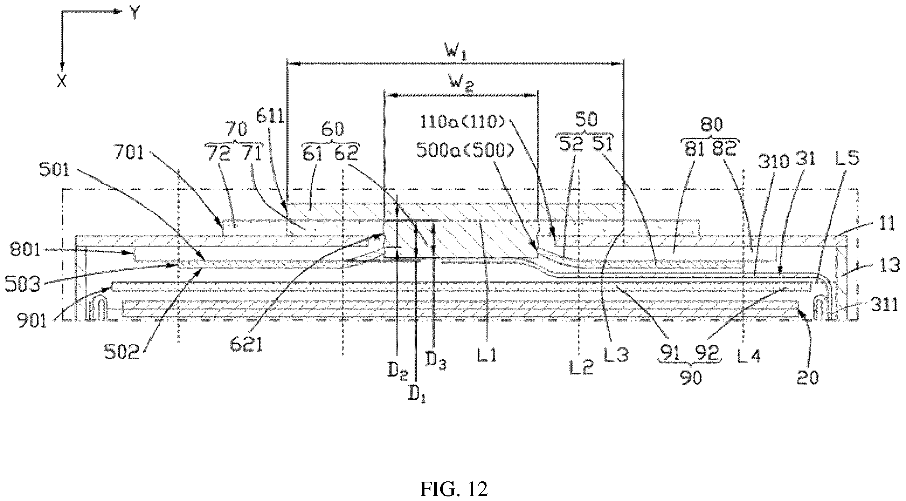

As shown in FIG. 12, in some other embodiments, when viewed along the second direction Y, the fifth edge 621 of the protruding portion 62 is bent and extends in the first direction X. For example, the fifth edge 621 may be a curved surface, which is conducive to increasing the contact area between the first layer 70 or the second layer 80 and the protruding portion 62, and facilitates formation of a snap-fit structure between the plate-shaped member 50 and the first layer 70 or the second layer 80, improving the sealing reliability.

As shown in FIG. 2A and FIG. 2B, in some embodiments, a third layer 90 including a third insulating material is provided between the electrode assembly 20 and the plate-shaped member 50. The third layer 90 is configured to reduce the probability of short circuit caused by the protruding portion 62 piercing the electrode assembly 20, improving the reliability and safety of the electrochemical device 100. When an electrode plate at the outermost layer of the electrode assembly 20 is a negative electrode plate, the third layer 90 can also implement electrical insulation between the electrode assembly 20 and the plate-shaped member 50 to reduce the risk of short circuit. The third layer 90 may substantially be a flat plate structure. In some embodiments, the third insulating material includes at least one of polyethylene, polypropylene, ethylene-propylene copolymer, polyether ether ketone, polyvinylidene fluoride, or polytetrafluoroethylene. The third insulating material may be the same as or different from the first insulating material or the second insulating material, which is not limited in this application. As shown in FIG. 1, when viewed along the first direction X, the third layer 90 may be circular. As shown in FIG. 2A and FIG. 2B, in some embodiments, the first conductive portion 31 includes a first connecting portion 310 and a second connecting portion 311 connected to each other. The first connecting portion 310 is configured to connect the protruding portion 62, and the second connecting portion 311 is configured to connect the second conductive portion 32. In the first direction X, the first connecting portion 310 is located between the protruding portion 62 and the third layer 90. Therefore, in the first direction X, a portion of the first conductive plate 31 located between the third layer 90 and the first wall 11 is the first connecting portion 310, and the second connecting portion 311 is a portion of the first conductive plate 31 excluding the first connecting portion 310. The virtual boundary line between the first connecting portion 310 and the second connecting portion 311 is shown in a dashed line L5. When the first conductive plate 30 exhibits positive polarity and an electrode plate at the outermost layer of the electrode assembly 20 is a negative electrode plate, because the first connecting portion 310 is located between the protruding portion 62 and the third layer 90, the third layer 90 can also implement electrical insulation between the first conductive plate 30 and the electrode plate at the outermost layer of the electrode assembly 20 to reduce the risk of short circuit.

In some embodiments, when viewed along the first direction X, the third layer 90 includes a fifth region 91 overlapping with the plate-shaped member 50 and a sixth region 92 separated from the plate-shaped member 50. In addition to the regions where the second layer 80 overlaps with the first portion 51 and second portion 52 of the plate-shaped member 50, the fifth region 91 should also include the region where the second layer 80 overlaps with the second opening 500 of the plate-shaped member 50. The sixth region 92 extends in the second direction Y from the region overlapping with the second opening 500 of the plate-shaped member 50 to the regions overlapping with the second portion 52 and first portion 51 of the plate-shaped member 50, and further extends beyond the first portion 51 of the plate-shaped member 50. When an electrode plate at the outermost layer of the electrode assembly 20 is a negative electrode plate, the sixth region 92 being provided can reduce the probability of short circuit caused by contact between the electrode plate at the outermost layer of the electrode assembly 20 and the plate-shaped member 50 when the electrochemical device 100 undergoes dropping, shaking, or impact. In some embodiments, when viewed along the first direction X, the seventh edge 801 of the second layer 80 away from the protruding portion 62 is separated from an eighth edge 901 of the third layer 90. Referring to FIG. 1 and FIG. 2A, in the second direction Y, the eighth edge 901 of the third layer 90 may extend beyond the third end 221 and fourth end 222 of the second electrode plate 22 of the electrode assembly 20.

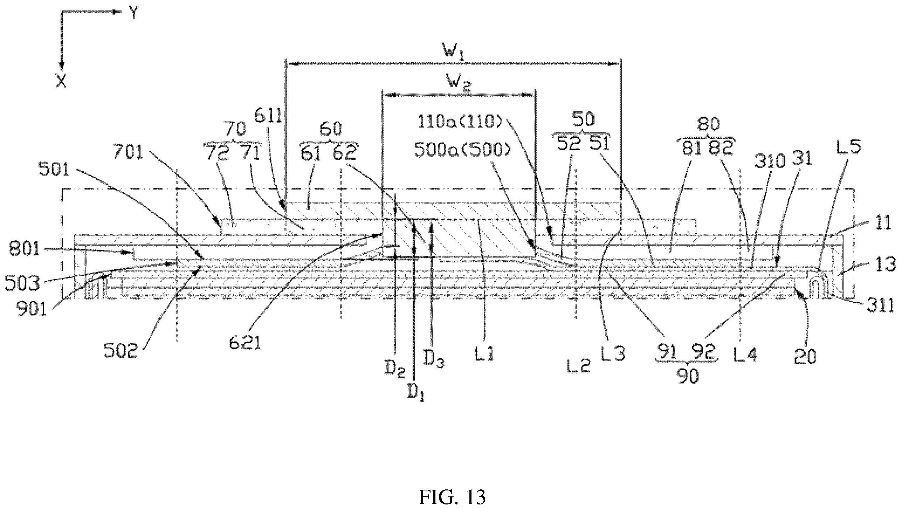

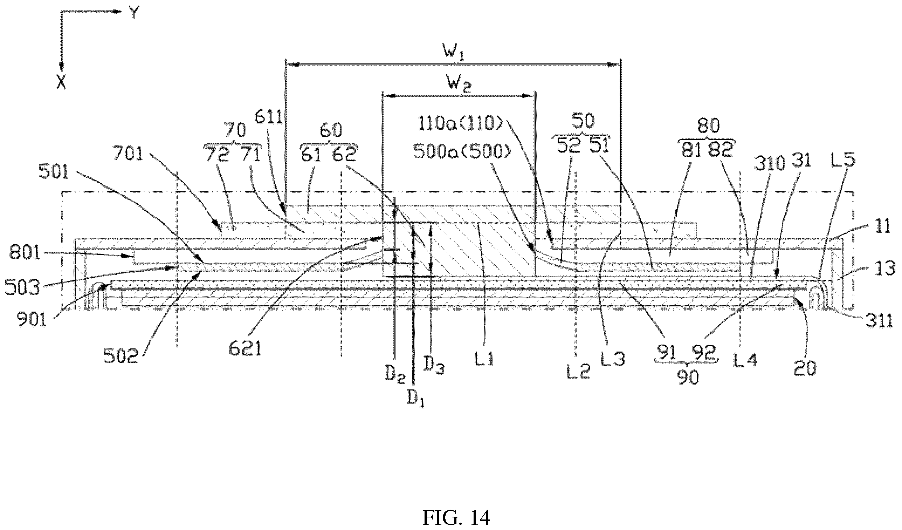

As shown in FIG. 2A and FIG. 2B, in some embodiments, in the first direction X, the first portion 51 of the plate-shaped member 50, the first connecting portion 310 of the first conductive plate 30, the third layer 90, and the electrode assembly 20 are spaced apart from each other. In other words, there is a gap between every adjacent two of the first portion 51 of the plate-shaped member 50, the first connecting portion 310 of the first conductive plate 30, the third layer 90, and the electrode assembly 20. This helps to accommodate the electrode assembly 20 in the housing 10, and the gaps can also be used to accommodate more electrolyte. As shown in FIG. 13, in some other embodiments, in the first direction X, the first portion 51 of the plate-shaped member 50, the first connecting portion 310 of the first conductive plate 30, the third layer 90, and the electrode assembly 20 may alternatively be in contact with each other. This can reduce shaking of the electrode assembly 20 in the housing 10 when the electrochemical device 100 undergoes mechanical abuse such as dropping or impact. As shown in FIG. 14, in other embodiments, when the length D₃ of the protruding portion 62 is increased, the protruding portion 62 can also press against the first connecting portion 310, such that the first connecting portion 310, the third layer 90, and the electrode assembly 20 are in contact with each other. In this case, the shaking of the electrode assembly 20 in the housing 10 during the mechanical abuse can also be reduced.

As shown in FIG. 4 and FIG. 5, in some embodiments, thickness of the first portion 51 is T₁, and thickness of the second portion 52 is T₂, where T₂ may be equal to T₁. In this case, the plate-shaped member 50 is easy to form. For example, the plate-shaped member 50 can be cut into a required shape through processes such as laser cutting or machine tool processing, and then the bent second portion 52 is formed in the middle of the plate-shaped member 50 through stamping.

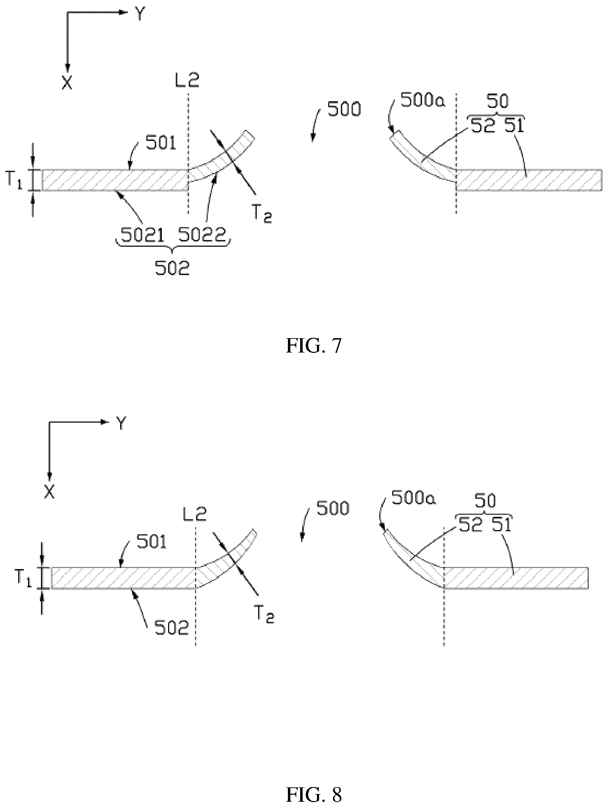

As shown in FIG. 7 and FIG. 8, in some other embodiments, T₂ < T₁. Because the second portion 52 is relatively thinner, the second portion 52 is more likely to be separated from the protruding portion 62 under the action of internal gas, thereby relieving the pressure inside the accommodating cavity S. It can be understood that the thickness T₁ of the first portion 51 is a distance between the first surface 501 and second surface 502 of the first portion 51. When the entire first portion 51 extends in the second direction Y, the thickness T₁ is thickness of the first portion 51 in the first direction X. The thickness T₂ of the second portion 52 is the distance between the first surface 501 and second surface 502 of the first portion 51. The second portion 52 extends in a direction deviating from the second direction Y, so the thickness T₂ is thickness of the second portion 52 in a direction deviating from the first direction X. The thicknesses T₁ and T₂ can be measured using a laser rangefinder or a micrometer.

Further, in some embodiments, as shown in FIG. 7, the second surface 502 is a stepped surface, and includes a first section 5021 located on the first portion 51 and a second section 5022 located on the second portion 52. The first section 5021 and the second section 5022 may both be parallel to the first surface 501, and the second section 5022 is closer to the first surface 501 compared with the first section 5021, such that T₂ < T₁. As shown in FIG. 8, in some other embodiments, in an extension direction of the plate-shaped member 50 (that is, a direction from the first portion 51 to the second portion 52), the thickness of the second portion 52 gradually decreases, so the maximum thickness of the second portion 52 may be equal to the thickness T₁ of the first portion 51, the minimum thickness of the second portion 52 may be any value less than T₁, and the minimum thickness of the second portion 52 may alternatively be zero. Therefore, when T₂ < T₁ is defined, T₂ actually refers to an average thickness of the second portion 52. The average thickness of the second portion 52 can be measured in the following method: in the extension direction of the plate-shaped member 50, the thickness of the second portion 52 is measured every 1 mm using a laser rangefinder or a micrometer, to obtain multiple thickness values. The thickness T₂ is an average value of the multiple thickness values.

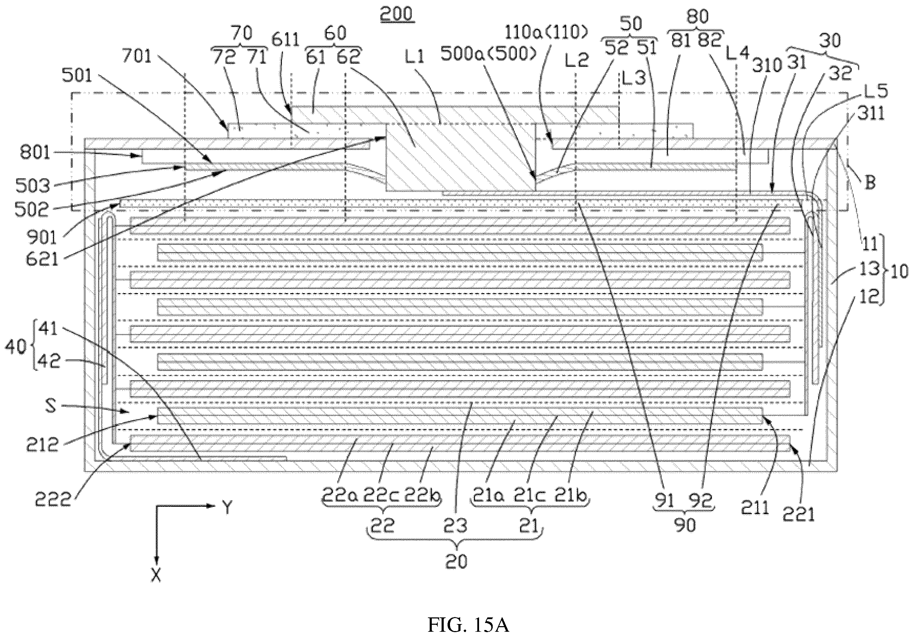

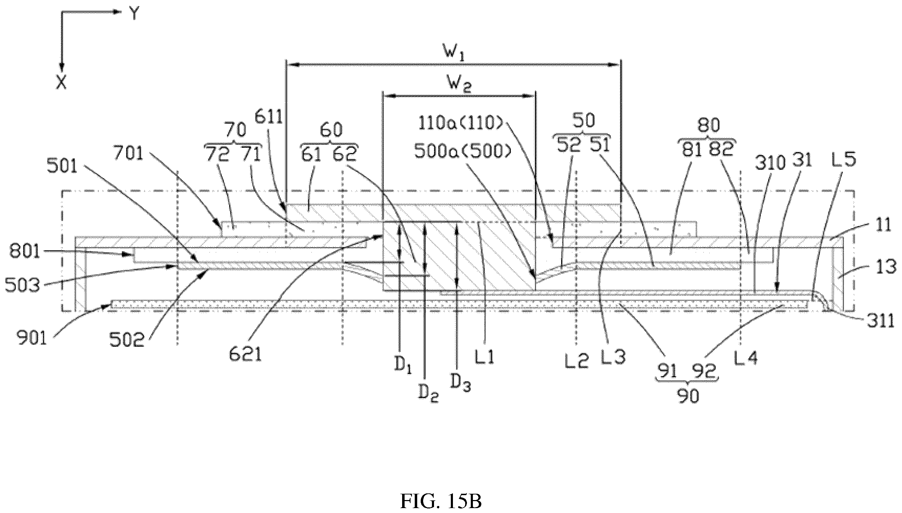

Referring to FIG. 15A and FIG. 15B, another embodiment of this application further provides an electrochemical device 200, where FIG. 15B is a partial schematic diagram of the electrochemical device 200 shown in FIG. 15A at position B, and the position B is framed with double-dotted dashed lines. The electrochemical device 200 is different from the electrochemical device 100 in the structure of the plate-shaped member 50. In this embodiment, D₁ < D₂.

In some embodiments, the second portion 52 is bent toward the electrode assembly 20 relative to the first portion 51, such that D₁ < D₂. In this application, the second portion 52 is set to extend in a direction deviating from the second direction Y, such that D₁ < D₂. When gas accumulates inside the electrochemical device 200, the force exerted by the second portion 52 deviating from the second direction Y on the protruding portion 62 is also small, so the protruding portion 62 detaches from the second portion 52, causing the cover body 60 to be forced open. This allows the gas inside the housing 10 to flow out through the second opening 500 and the first opening 110, and relieves the pressure inside the accommodating cavity S, reducing the probability of explosion of the electrochemical device 200, thereby improving the reliability and safety. In addition, as compared with the electrochemical device 100, because the second portion 52 is bent toward the electrode assembly 20, more of the second layer 80 can be accommodated between the protruding portion 62 and the second portion 52, helping to improve the sealing reliability.

In some embodiments, D₁ and D₂ further satisfy 1.1D₁ ≤ D₂ ≤ 1.5D₁. This can reduce the probability that the gas inside the electrochemical device 100 is less likely to force open the cover body 60 when D₂ is too close to D₁. In addition, this can reduce the probability of decreased energy density caused by the plate-shaped member 50 occupying a large space in the housing 10 when D₂ is large (that is, the second portion 52 is bent to a great extent relative to the first portion 51), and can also reduce the probability of electrolyte leakage due to reduced reliability of snap-fitting between the plate-shaped member 50 and the protruding portion 62 when D₂ is large.

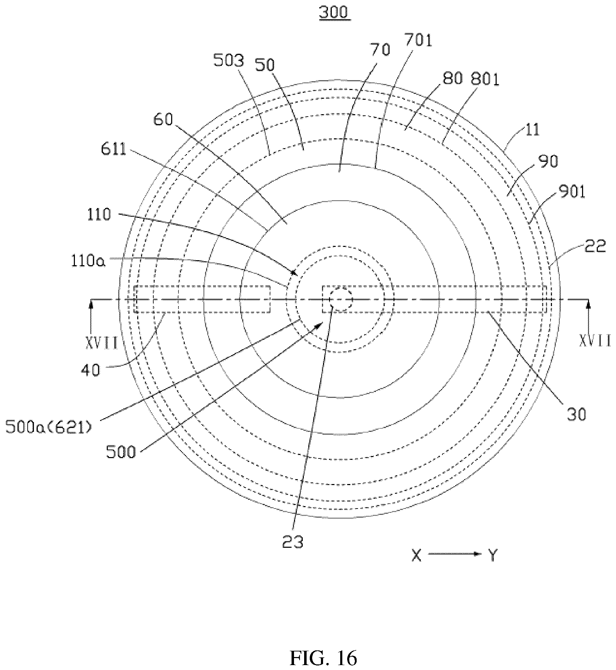

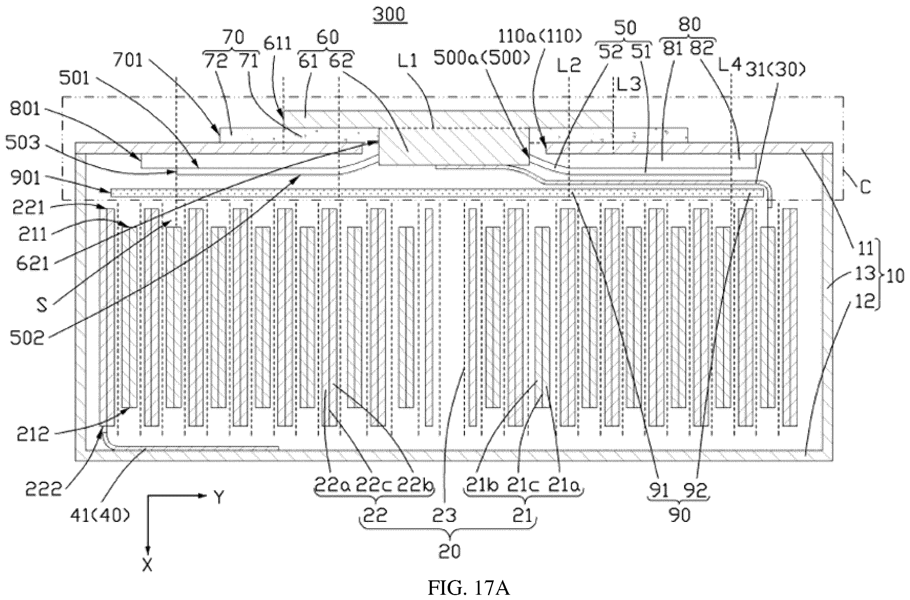

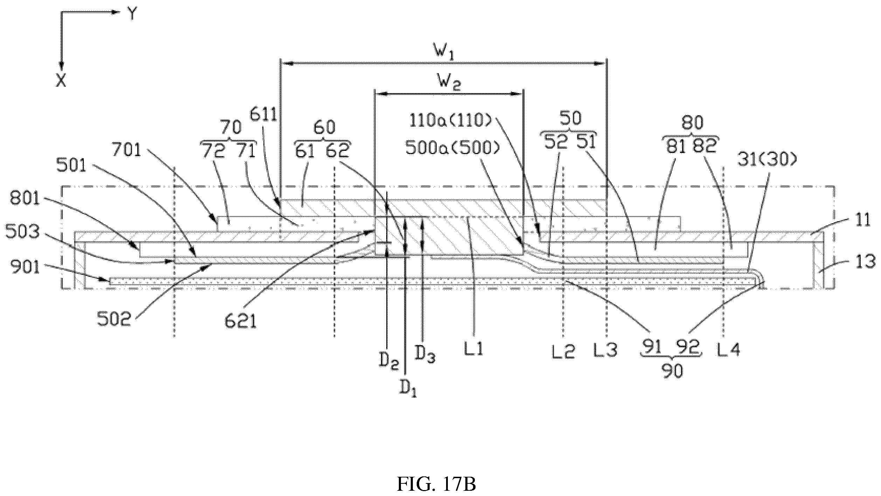

Referring to FIG. 16, FIG. 17A, and FIG. 17B, still another embodiment of this application further provides an electrochemical device 300, where FIG. 17B is a partial schematic diagram of the electrochemical device 300 shown in FIG. 17A at position C, and the position C is framed with double-dotted dashed lines. The electrochemical device 300 is different from the electrochemical device 100 in the structure of the electrode assembly 20. In this embodiment, the electrode assembly 20 is a wound structure, meaning that the first electrode plate 21, the separator 23, and the second electrode plate 22 are stacked and then wound around a winding central axis O set in the first direction X to form the electrode assembly 20. In this case, in the first direction X, the first electrode plate 21 includes a first end 211 and a second end 212 disposed opposite each other, and the second electrode plate 22 includes a third end 221 and a fourth end 222 disposed opposite each other, where the first end 211 and the third end 221 both face the first wall 11.

Further, in some embodiments, the first conductive plate 30 is connected to the first end 211 and further connected to the protruding portion 62. The second conductive plate 40 is connected to the fourth end 222 and further connected to the housing 10. To allow the first conductive plate 30 to extend out of the first end 211 and then be connected to the housing 10, when viewed along the first direction X, the eighth edge 901 of the third layer 90 is separated from an electrode plate at the outermost layer of the electrode assembly 20 (such as the second electrode plate 22). In addition, in the second direction Y, the eighth edge 901 of the third layer 90 does not extend beyond the electrode plate at the outermost layer of the electrode assembly 20. As shown in FIG. 16 and FIG. 17A, in some embodiments, the outermost layer of the electrode assembly 20 may be the second electrode plate 22, and the innermost layer of the electrode assembly 20 may be the separator 23.

As shown in FIG. 17A, in some embodiments, the first conductive plate 30 may include one first conductive portion 31 only, and two ends of the first conductive portion 31 are connected to the first electrode plate 21 and the protruding portion 62 respectively. The second conductive plate 40 may include a first third conductive portion 41 only, and two ends of the third conductive portion 41 are connected to the second electrode plate 22 and the housing 10 respectively. In some other embodiments, the first conductive plate 30 may alternatively include one first conductive portion 31 and a plurality of second conductive portions (not shown in the figure). The plurality of second conductive portions are connected to the first conductive layers 21c of the first electrode plates 21 respectively, and the first conductive portion 31 and the plurality of second conductive portions are fixed through welding. The second conductive plate 40 may alternatively include one third conductive portion 41 and a plurality of fourth conductive portions (not shown in the figure). The plurality of fourth conductive portions are connected to the second conductive layers 22c of the second electrode plates 22 respectively, and the third conductive portion and the plurality of fourth conductive portions are fixed through welding.

The electrochemical device 100, 200, 300 of this application includes all devices in which electrochemical reactions can take place. Specifically, the electrochemical device 100, 200, 300 includes all kinds of primary batteries, secondary batteries, fuel batteries, solar batteries, and capacitors (for example, super capacitors). Optionally, the electrochemical device 100, 200, 300 may be a lithium secondary battery, including a lithium metal secondary battery, a lithium-ion secondary battery, a lithium polymer secondary battery, and a lithium-ion polymer secondary battery.

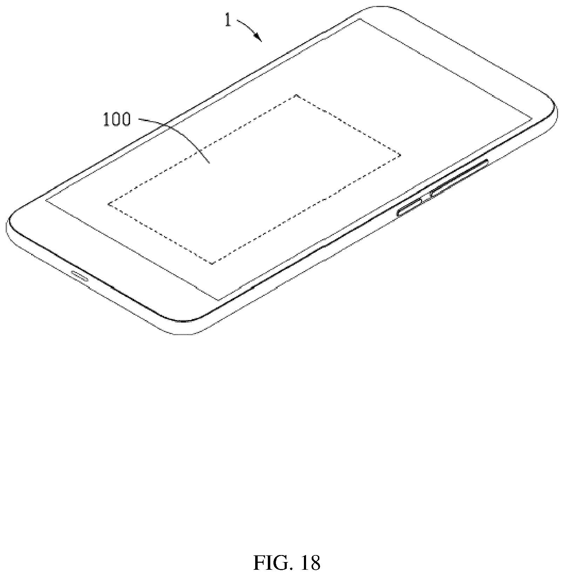

Referring to FIG. 18, an embodiment of this application further provides an electronic device 1 including the electrochemical device 100 (or the electrochemical device 200, 300). The electronic device 1 is powered by the electrochemical device 100. The electrochemical device 100 has good sealing performance and can release pressure under high pressure, thereby maintaining good reliability and safety. In an embodiment, the electronic device 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Specific examples and comparative example below are used to describe the performance of the electrochemical device provided in this application. This application is described by using an example in which the electrochemical device is a button cell and with reference to specific preparation procedures and test methods. Persons skilled in the art should understand that a preparation method described in this application is only an example, and that all other suitable preparation methods fall within the scope of this application.

### Example 1

Referring to FIG. 2A and FIG. 2B, an electrode assembly 20 with a first conductive plate 30 and a second conductive plate 40 was placed in an accommodating cavity S, such that the second conductive plate 40 was electrically connected to a second wall 12 or a side wall 13. A protruding portion 62 of a cover body 60 was inserted into a first opening 110 of a first wall 11 and a second opening 500 of a plate-shaped member 50 sequentially, such that the protruding portion 62 abutted against a second edge 500a of the second opening 500 to form an embedded structure. Then, the protruding portion 62 was electrically connected to the first conductive plate 30, and the first wall 11 was mounted on the side wall 13 to form a housing 10, such that the first opening 110 and the second opening 500 at least partially overlapped when viewed along a first direction X, to obtain a battery. A second portion 52 of the plate-shaped member 50 extended in a direction deviating from a second direction Y, and a distance D₁ between a first portion 51 and a cover portion 61 and a distance D₂ between the second edge 500a and the cover portion 61 satisfied D₂:D₁ = 0.9.

### Examples 2 to 12

The difference from Example 1 was the ratio of D₂ to D₁.

### Comparative Example

The difference from Example 1 was that the second portion 52 of the plate-shaped member 50 did not extend in a direction deviating from the second direction Y, meaning that the ratio of D₂ to D₁ was 1.

100 batteries were taken from each example and comparative example for drop test and hotbox (Hotbox) test respectively, and the corresponding test results were recorded in Table 1.

The steps of the drop test are as follows:
(1) In a 25±5°C environment, the battery was charged to 100% SOC (State of Charge, state of charge).
(2) The battery was put into a fixture compartment, and an automatic drop device was used to drop the battery from a position of 1.8 m to a steel plate, sequentially with a bottom face, a side face, and a top face of the battery facing the steel plate as one round. The drops totaled 6 rounds, that is, 18 drops.
(3) The proportion of batteries that have experienced electrolyte leakage was counted.

The steps of the hotbox (Hotbox) test are as follows:
(1) In a 25±5°C environment, the battery was discharged to 3.0 V at 0.2C, left standing for 5 min, and then charged to 4.48 V at a constant current of 1.5C and a constant voltage until the current was ≤ 0.05C.
(2) Then, the battery was put into a hotbox, heated to 150°C±2°C at a velocity of 5°C/min±2°C/min, and maintained at that temperature for 60 min. Whether the battery relieved the pressure normally was observed.
(3) The proportion of batteries with poor pressure relief was counted.

**Table 1**

| | D₂:D₁ | Proportion of poor pressure relief | Proportion of electrolyte leakage |
|---|---|---|---|
| Comparative Example | 1 | 15/100 | 0/100 |
| Example 1 | 0.9 | 0/100 | 0/100 |
| Example 2 | 0.8 | 0/100 | 0/100 |
| Example 3 | 0.7 | 0/100 | 0/100 |
| Example 4 | 0.6 | 0/100 | 0/100 |
| Example 5 | 0.5 | 0/100 | 0/100 |
| Example 6 | 0.4 | 0/100 | 13/100 |
| Example 7 | 1.1 | 0/100 | 0/100 |
| Example 8 | 1.2 | 0/100 | 0/100 |
| Example 9 | 1.3 | 0/100 | 0/100 |
| Example 10 | 1.4 | 0/100 | 0/100 |
| Example 11 | 1.5 | 0/100 | 0/100 |
| Example 12 | 1.6 | 0/100 | 10/100 |

| | | | |
|---|---|---|---|
| Note: The proportion X/100 of poor pressure relief indicates that the number of samples with poor pressure relief among the 100 samples tested is X. The proportion of electrolyte leakage has the same meaning. | | | |

It can be learned from the test results in Table 1 that as compared with the comparative example, because the second portion 52 extending in a direction deviating from the second direction Y is provided in Examples 1 to 12, the second portion 52 detaches from the protruding portion 62 to implement pressure relief in the hotbox test, improving the reliability and safety of the battery. As compared with Examples 1 to 5, due to the relatively smaller ratio of D₂:D₁ in Example 6, the proportion of batteries that have experienced electrolyte leakage relatively increases. As compared with Examples 7 to 11, due to the relatively larger ratio of D₂:D₁ in Example 12, the proportion of batteries that have experienced electrolyte leakage relatively increases.

The descriptions disclosed above are only the preferred embodiments of this application, and do not, certainly, constitute any limitation on this application. Accordingly, any equivalent changes made in accordance with this application still fall within the scope of this application.

## Claims

1. An electrochemical device, comprising a housing and an electrode assembly, wherein the housing has an accommodating cavity and a first wall covering the accommodating cavity, the first wall comprises a first opening, and the electrode assembly is accommodated in the accommodating cavity; wherein,
the electrochemical device further comprises a plate-shaped member and a cover body, wherein the plate-shaped member is accommodated in the accommodating cavity and disposed between the first wall and the electrode assembly, and the plate-shaped member comprises a second opening;
a direction in which the plate-shaped member and the electrode assembly are arranged is defined as a first direction, and when viewed along the first direction, the first opening and the second opening at least partially overlap, and the cover body covers the first opening and the second opening;
the cover body comprises a cover portion and a protruding portion extending from the cover portion toward the electrode assembly, and in the first direction, the protruding portion extends into the accommodating cavity and abuts against a second edge of the second opening; and
in a second direction perpendicular to the first direction, the plate-shaped member comprises a first portion and a second portion connected to the first portion and extending in a direction deviating from the second direction, and the second portion surrounds the protruding portion to form the second edge; and in the first direction, a distance between the first portion and the cover portion is a first distance, and a distance between the second edge and the cover portion is a second distance, the first distance being different from the second distance.

2. The electrochemical device according to claim 1, wherein, the first distance is D₁, and the second distance is D₂, wherein 1.1D₁ ≤ D₂ ≤ 1.5D₁ or 0.5D₁ ≤ D₂ ≤ 0.9D₁.

3. The electrochemical device according to claim 1, wherein, when viewed along the first direction, a portion of the second edge is provided within the first opening.

4. The electrochemical device according to claim 1, wherein, the second portion is bent toward the cover portion relative to the first portion.

5. The electrochemical device according to claim 4, wherein, in the first direction, the first opening is spaced apart from the second opening.

6. The electrochemical device according to claim 1, wherein, the second portion is bent toward the electrode assembly relative to the first portion.

7. The electrochemical device according to claim 1, wherein, a thickness of the first portion is T₁, and a thickness of the second portion is T₂, wherein T₂ < T₁.

8. The electrochemical device according to claim 1, wherein, the protruding portion is made of aluminum or an aluminum alloy, and the plate-shaped member is made of steel.

9. The electrochemical device according to claim 8, wherein, a corrosion-resistant layer is provided on a surface of the plate-shaped member.

10. The electrochemical device according to claim 1, wherein, when viewed along the second direction, an edge of the protruding portion is bent and extends in the first direction.

11. The electrochemical device according to claim 1, wherein, a first layer comprising a first insulating material is provided between the cover portion and the first wall.

12. The electrochemical device according to claim 11, wherein, when viewed along the first direction, the first layer comprises a first region overlapping with the cover portion and a second region separated from the cover portion.

13. The electrochemical device according to claim 11, wherein, in the first direction, a projection of the first layer on the cover portion is located within the cover portion.

14. The electrochemical device according to claim 11, wherein, the first insulating material comprises one or more selected from the group consisting of polyethylene, polypropylene, ethylene-propylene copolymer, acrylate, polyether ether ketone, polyvinylidene fluoride, and polytetrafluoroethylene.

15. The electrochemical device according to claim 11, wherein, the first layer is connected to the protruding portion.

16. The electrochemical device according to claim 11, wherein, the first layer is connected to the second edge.

17. The electrochemical device according to claim 11, wherein, a second layer comprising a second insulating material is provided between the first wall and the plate-shaped member.

18. The electrochemical device according to claim 17, wherein, when viewed along the first direction, the second layer comprises a third region overlapping with the plate-shaped member and a fourth region separated from the plate-shaped member.

19. The electrochemical device according to claim 17, wherein, the second insulating material comprises one or more selected from the group consisting of polyethylene, polypropylene, ethylene-propylene copolymer, polyether ether ketone, polyvinylidene fluoride, and polytetrafluoroethylene.

20. The electrochemical device according to claim 17, wherein, the first layer is connected to the second layer.

21. The electrochemical device according to claim 17, wherein, when viewed along the first direction, an edge of the first layer facing away from the protruding portion is apart from an edge of the second layer facing away from the protruding portion.

22. The electrochemical device according to claim 1, wherein, the second distance is D₂, and in the first direction, a length of the protruding portion is D₃, wherein 0.8D₂ ≤ D₃ ≤ 1.2D₂.

23. The electrochemical device according to claim 1, wherein, a third layer comprising a third insulating material is provided between the electrode assembly and the plate-shaped member.

24. The electrochemical device according to claim 23, wherein, when viewed along the first direction, the third layer comprises a fifth region overlapping with the plate-shaped member and a sixth region separated from the plate-shaped member.

25. The electrochemical device according to claim 23, wherein, the third insulating material comprises one or more selected from the group consisting of polyethylene, polypropylene, ethylene-propylene copolymer, polyether ether ketone, polyvinylidene fluoride, and polytetrafluoroethylene.

26. The electrochemical device according to claim 23, wherein, the electrochemical device further comprises a first conductive plate connected to the electrode assembly, the first conductive plate comprises a first connecting portion connected to the protruding portion, and in the first direction, the first connecting portion is provided between the protruding portion and the third layer.

27. The electrochemical device according to claim 1, wherein, the electrochemical device is a button cell.

28. An electronic device, comprising the electrochemical device according to any one of claims 1 to 27.
